# EUROPEAN PATENT SPECIFICATION

(11) **EP 3 262 011 B1**
(45) Date of publication and mention of the grant of the patent: **11.11.2026**
(21) Application number: 16756261.0
(22) Date of filing: 24.02.2016
(51) Int. Cl.: C04B 35/19, C04B 35/04, C04B 35/628, C04B 35/185, C04B 35/657

(54) **REFRACTORY ARTICLE AND METHOD OF MAKING**
FEUERFESTER ARTIKEL UND VERFAHREN ZUR HERSTELLUNG
ARTICLE RÉFRACTAIRE ET PROCÉDÉ DE FABRICATION

(30) Priority: 24.02.2015 US 201562120343 P; 25.02.2015 US 201562120818 P
(43) Date of publication of application: 03.01.2018
(73) Proprietor: Saint-Gobain Ceramics&Plastics, Inc., Worcester, MA 01615 (US)
(72) Inventor: CITTI, Olivier, Wellesley, Massachusetts 02482 (US); TOWLE, Wesley S., North Grosvenordale, Connecticut 06255 (US); LECHEVALIER, David J., Tokyo 104-0032 (JP)
(74) Representative: Zimmermann & Partner Patentanwälte mbB
(86) International application number: PCT/US2016/019322
(87) International publication number: WO 2016/138111

(56) References cited:
- EP-A1- 1 813 580
- WO-A2-2004/063652
- US-A- 5 288 672
- US-A- 5 290 739
- US-A- 6 007 873
- US-A1- 2005 051 057
- US-A1- 2012 227 445
- US-A1- 2013 217 563
- US-B1- 6 378 598
- "74th Conference on Glass Problems : Sundaram/74th Conference", 28 April 2014, JOHN WILEY & SONS, INC., Hoboken, NJ, USA, ISBN: 978-1-118-93297-1, article TOM KLEEB ET AL: "High Emissivity Coatings in Glass Furnaces : Sundaram/74th Conference", pages: 225 - 231, XP055486585, DOI: 10.1002/9781118932964.ch23
- "71st Conference on Glass Problems : Ceramic Engineering and Science Proceedings", 23 May 2011, JOHN WILEY & SONS, INC., Hoboken, NJ, USA, ISBN: 978-1-118-05996-8, article TOM KLEEB ET AL: "Fuel Savings with High Emissivity Coatings : Ceramic Engineering and Science Proceedings", pages: 125 - 136, XP055486642, DOI: 10.1002/9781118095348.ch13

## Description

### TECHNICAL FIELD

This invention relates to a sintered refractory product, which is particularly suitable for the production of glass furnace superstructures.

### BACKGROUND ART

Among refractory products, there are sintered products, well known for the construction of glass-melting furnaces, and fused products. Unlike sintered products, fused products usually comprise an intergranular vitreous phase binding crystallized grains. The problems posed by sintered products and by fused products, and the technical solutions adopted to overcome them, are therefore generally different. A composition developed for fabricating a fused product is therefore not a priori usable as such for fabricating a sintered product, and vice-versa.

Sintered products are obtained by mixing appropriate raw materials then crude shaping this mixture and firing the resulting crude part at a sufficient temperature and for a sufficient time to achieve the sintering of this crude part. Sintered products, depending on their chemical composition, are designed for very varied industries.

Numerous sintered products are particularly suitable for the fabrication of glass furnaces, chiefly for the superstructure, meaning the walls under the vault not in contact with the sintered glass, and for the vault of glass furnaces. EP1813580 A1 relates to a refractory brick to be used for the bottom of a float bath i.e. a tin bath in float process for production of plate glass, and a process for its production.

In furnaces where the raw materials making up the glass are melted by flame burners, there is a constant need to improve energy efficiency. The present invention aims to meet this need.

### SUMMARY

According to one aspect, a refractory article is defined according to claim 1.

### BRIEF DESCRIPTION OF THE DRAWINGS

FIG. 1 includes emissivity of certain samples according to embodiments.
FIG. 2 includes emissivity of certain samples according to embodiments.
FIG. 3 includes an emissivity spectra for a sample according to an embodiment.
FIG. 4 includes an emissivity spectra for a sample according to an embodiment.

### DETAILED DESCRIPTION OF THE PREFERRED EMBODIMENT(S)

A product according to the embodiments herein may contain hafnium oxide, HfO₂, which can be naturally present in sources of zirconia. The mass content of zirconia in the article according to the embodiments can be less than or equal to 5%, generally not greater than 2%. Zirconia or"ZrO₂" conventionally means zirconia and these traces of hafnium oxide. HfO₂ is therefore not included in the "other types of oxides". "Impurities" mean the unavoidable constituents, necessarily introduced with the raw materials or resulting from reactions with these constituents. These impurities are not necessarily constituents but are merely tolerated.

The "size" of a particle is the mean of its largest dimension dM and its smallest dimension dm: (dM+dm)/2. The "maximum size" of a particle corresponds to the minimum standard screen opening through which the said particle can pass. The "mean size" of a mixture of particles is the size dividing the particles of this mixture into first and second populations that are equal in number, these first and second populations containing only those particles that have a greater or smaller size respectively than the mean size.

Reference herein to "chamotte" is a mixture of grains obtained from a product that is sintered and crushed to the desired grain size. The sintered product can be specially prepared or a manufacturing reject or even a used product that can be thus recycled.

Unless stated otherwise, all of the percentages of the present description are mass percentages based on the oxides. In a sintered product according to the invention, the presence of iron, expressed in the form of Fe₂O₃ and/or titanium oxide, expressed in the form of TiO₂, in the contents according to the invention, allows, in combination with the other constituents, a refractory product to be obtained that is particularly well suited for use in the vault of a glass-melting furnace. However, at excessively high contents, the presence of these oxides may be detrimental, and thus excessive amounts of such materials may be limited.

The process for forming the articles of the embodiments herein, which may be refractory articles designed for applications in glass-melting furnaces, can include the following steps. For example, at step a), the raw materials are chosen based upon an intended final composition of the article. The raw materials are weighed, combined in the desired contents, and mixed together to form a mixture. The mixture may include binding agents, such as an organic binding agent and/or deflocculants.

Next, at step b), the mixture prepared at step a) can be poured into a mold then shaped so as to form a crude part. The mold can be shaped so that the finally-formed article assumes the form of a block having a mass of more than 5 kg, preferably more than 10 kg. Such blocks are well suited to the applications in question, notably, for use as portions of glass-melting furnaces.

Various shaping processes may be used. For example, shaping can include molding, punching, pressing (e.g., isostatic pressing, uniaxial pressing, etc.), casting (e.g., slip casting, gel casting, vibrocasting, etc.), or a combination of any of these techniques. Shaping might result from isostatic pressing at pressures of over 100 MPa. This technique may enable a more reactive sintering, obtaining denser sintered products. The apparent porosity of the sintered products can be below 15%, such as below 10% or below 5% or below 2%, or even below 1%. The shaping process can form a green body or crude part, which will undergo further processing (e.g., sintering) before the final article is formed.

At step c) the crude part is sintered. Sintering is preferably performed at a temperature of between 1400°C and 2500°C, in a reducing or oxidizing atmosphere. Sintering might be conducted in a reducing atmosphere at atmospheric pressure.

On completing sintering, a sintered article according to the embodiments herein is formed and is defined in the claims. The sintered article may be in the form of a block, which may be a monolithic piece. Alternatively, the sintered article can be a coating on another part. In still, another embodiment, the sintered article can be a composite body. The composite body may include a core and a coating overlying the core, as described in embodiments herein. The coating can be formed after forming the crude part, but prior to sintering. Thus, the core and the coating can be co-sintered or sintered simultaneously. The core can be formed and sintered first, and thereafter, the coating can be applied and sintered in a separate operation from the sintering of the core.

The body of the article can have various dimensions, (for example a surface layer of a thickness of less than 50 mm, less than 40mm, less than 30mm, for example of around 20 mm), notably a region that is exposed to the irradiation of the flames. The shape of the body is not limiting. The body may have at least one dimension (thickness, length or width) of at least 150 mm, preferably at least 200 mm, at least 400 mm, at least 600 mm, at least 800 mm or at least 1000 mm, or even yet at least 1600 mm. In one embodiment, the thickness, length and width of the body are at least 150 mm, such as at least 200 mm, or at least 300 mm, or at least 400 mm.

Preferably, the article forms part of the superstructure (vault) of a furnace, such as a glass-melting furnace. The present disclosure is not limited only to the embodiments described and provided by way of illustrative and non-limiting examples.

According to one embodiment, an article can be include a body including an aluminosilicate and at least one dopant selected from the group consisting of Ni-containing compounds, Ni-containing oxide compounds, Fe-containing compounds, Fe-containing oxide compounds, Mg-containing compounds, Mg-containing oxide compounds, Mg containing and Al-containing oxide compounds, La-containing compounds, La-containing oxide compounds, Cr-containing compounds, Cr-containing oxide compounds, Mn-containing compounds, Mn-containing oxide compounds, Ce-containing compounds, Ce-containing oxide compounds, Sn-containing compounds, Sn-containing oxide compounds, Ti-containing compounds, Ti-containing oxide compounds, Zr-containing compounds, Zr-containing oxide compounds, spinel, and a combination thereof. It will be appreciated that the body can include a combination of dopant materials and is not limited to one dopant. However, there are embodiments herein that utilize only a single dopant material.

The body has a majority content by weight of the aluminosilicate. In particular, the body includes a content of the aluminosilicate of at least 70 wt% or at least 75 wt% or at least 80 wt% or at least 85 wt% or at least 88 wt% or at least 89 wt% or at least 90 wt% or at least 91 wt% or at least 92 wt% or at least 93 wt% or at least 94 wt% or at least 95 wt% or at least 96 wt%. Still, the body includes a content of the aluminosilicate of not greater than 97 wt% or not greater than 96 wt% or not greater than 95 wt% or not greater than 94 wt% or not greater than 93 wt% or not greater than 92 wt% or not greater than 91 wt% or not greater than 90 wt% or not greater than 89 wt% or not greater than 88 wt% or not greater than 87 wt% or not greater than 86 wt% or not greater than 85 wt%. It will be appreciated that the body can include a content of the aluminosilicate within a range including any of the minimum and maximum percentages noted above. It will further be appreciated that all compositions herein will have a total content of species that add up to 100%.

According to one particular embodiment, the aluminosilicate can include mullite (3Al₂O₃ 2SiO₂), and more particularly, the aluminosilicate may consist essentially of mullite. Materials that consist essentially of a species may include some impurities, but such impurities do not materially change the operation of the material.

In at least one embodiment, the body can include a content of the at least one dopant of at least 3.5 wt%, at least 4 wt%, at least 4.5 wt%, at least 5 wt%, 5.5 least 6 wt%, at least 6.5 wt%, at least 7 wt% at least 7.5 wt% at least 8 wt% at least 8.5 wt%, at least 9 wt%, at least 9.5 wt%, at least 9.8 wt%. Still, in another instance, the body can have a content of the at least one dopant of not greater not greater than 5 wt%, not greater than 4 wt%, not greater than 3 wt%. It will be appreciated that the body can include a content of the at least one dopant within a range including any of the minimum and maximum percentages noted above.

In one embodiment, the at least one dopant can include a material selected from the group consisting of NiFe₂O₄, Fe₃O₄, MgAl₂O₄ and Fe₃O₄, La₂O₃, LaCrO₃, Cr₂O₃, MnO₂, CeO₂, NiO, SnO₂, TiO₂, ZrB₂, (Mg, Fe)(Al, Fe)₂O₄, and a combination thereof. More particularly, the body may have a single dopant, which may include any of the above noted dopants. Still, in another embodiment, the body may include a plurality of dopants, including any combination of the dopants noted herein.

In still another embodiment, the body can have an average relative emissivity over a range of wavelengths of 0.5 microns to 5 microns of at least 0.5, such as at least 0.6, at least 0.65, at least 0.7, at least 0.8, at least 0.83, at least 0.85, at least 0.87, at least 0.88, at least 0.89, at least 0.9. In one non-limiting embodiment, the average relative emissivity over the wavelength of 0.5 microns to 5 microns can be not greater than 0.99, such as not greater than 0.98. It will be appreciated that the average relative emissivity can be within a range including any of the minimum and maximum values noted above. Moreover, the average relative emissivity can be for a range of wavelengths in the infrared portion of the electromagnetic spectrum thus providing an indication of the efficiency of reflecting heat.

In still another embodiment, the body can have a minimum emissivity over a range of wavelengths of 0.5 microns to 5 microns of at least 0.5, wherein the minimum emissivity is defined as the lowest point along the emissivity spectrum curve over the range of wavelengths. In still another embodiment, the minimum emissivity can be at least 0.6, such as at least 0.65, at least 0.7, at least 0.8, at least 0.83, at least 0.85, at least 0.87, at least 0.88, at least 0.89, at least 0.9. In one non-limiting embodiment, the minimum emissivity over the range of wavelengths of 0.5 microns to 5 microns can be not greater than 0.99, such as not greater than 0.98. It will be appreciated that the minimum emissivity can be within a range including any of the minimum and maximum values noted above.

Reference herein to emissivity can be an emissivity value at a specific temperautre, including for example, but not limited to 25°C, 100°C, 500°C, 1000°C, or 1600°C. Emissivity can be measured using two Fourier transform infrared (FTIR) spectrometers manufactured by Bruker (Vertex Vertex 80v and 70) for performing emission measurements in the spectral range of 1000-16000 cm⁻¹. The samples have a thickness of about 4 mm and the typical diameter of the analyzed area on the sample is 2 mm. The sample heating is provided by a CO2 laser (Diamond K500, Coherent INC.). The beam follows a path through a splitter and a set of mirrors for conducting heating of the two faces of the sample. Two radiation heat flux are simultaneously measured by both spectrometers: the flux emitted by the sample and the flux emitted by a black body. The black body is a Pyrox PY8 furnace, having a cylindrical cavity in lanthanum chromite LaCrO₃, pierced with a lateral orifice, and has an emissivity equal to 1. The emission of a heated sample is measured in the direction perpendicular to the surface (i.e., normal emissivity). The infrared spectrometers are also used as pyrometers for the measurement of the sample temperature. The method used is that from the point of Christiansen.

In at least one embodiment, the body can have a melting temperature of at least 1100°C or at least 1200°C or at least 1300°C or at least or at least 1400°C or at least 1500°C or at least 1600°C or at least 1700°C or at least 1800°C or at least 1900°C or at least 2000°C or at least 2100°C or at least 2200°C. Still, in at least one embodiment, the melting temperature can be not greater than 3200°C or not greater than 3000°C or not greater than 2900°C or even not greater than 2800°C. It will be appreciated that the body can have a melting temperature within a range including any of the minimum and maximum values noted above.

The body may be particularly useful as a refractory article, such as a portion of a glass furnace. In at least one embodiment, the body can be a refractory article used as part of a glass furnace superstructure.

The body can be formed to have a particular theoretical density to facilitate suitable performance, including but not limited to a theoretical density of at least 50% or at least 60% or at least 70% or at least 80% or at least 90% or at least 95% or at least 97% or at least 99%. In one embodiment, the theoretical density can be not greater than 99%, such as not greater than 98%, not greater than 97%, not greater than 95%, not greater than 90% or even not greater than 88%. It will be appreciated that the body can have a theoretical density within a range including any of the minimum and maximum values noted above.

In certain instances, the body may be essentially free of certain elements or species containing such elements. For example, the body may be essentially free of Sn, La, Cr, Mn, Ni, Zr, B, Ce, Ti, oxide compounds thereof, zircon, and a combination thereof. Reference herein to contents of materials in the body that are essentially free include not greater than trace amounts of materials or contents of the materials that are present in impurity contents, such as less than 1 wt%, less than 0.5 wt%, less than 0.1 wt% or even less than 0.01 wt%.

In another embodiment, the body can be essentially free of carbides, nitrides, borides, and a combination thereof. Moreover, it will be appreciated that in at least one instance, the body can consist essentially of oxides and/or oxide-containing compounds.

The body may include a combination of distinct phases including polycrystalline, monocrystalline and/or amorphous phases. For example, the body can include a phase of the aluminosilicate material and a phase including the dopant material. Still, in certain instances one or more phases may exist in the body including a combination of the aluminosilicate and at least one dopant. Such phases having a combination of the aluminosilicate and at least one dopant may be a solid solution of one or more of the elements contained in the compounds. Still, in other instances, a phase including the aluminosilicate and at least one dopant may form a completely distinct composition and discrete phase.

In one embodiment, the body can include a phase including alumina that can be distinct from a phase comprising the aluminosilicate. According to one embodiment, the body can have a content of a phase including alumina that is less than a content of a phase comprising the aluminosilicate.

Moreover, in yet another embodiment, the body may include a phase of silica distinct from a phase comprising the aluminosilicate. In such instances, the body may have a content of silica less than a content of a phase comprising the aluminosilicate.

The body has at least one dopant including a combination of a Mg-containing compound and a Fe-containing compound present in an amount within a range including at least 3 wt% and not greater than 6 wt% for a total weight of the body. At least one part of the dopant can include a spinel material, which can have a spinel structure of MX₂O₄, wherein M and X are cation elements, and more particularly may be selected from the group of Ni, Al, Sn, Mg, Fe, and a combination thereof. The spinel can have an octahedral or cubic crystalline structure.

In yet another embodiment, the body can include a dopant that can include a mixture or compound including a spinel compound and Fe-containing oxide compound. In such instances, the dopant can be a mixture including a molar ratio of the compounds (spinel compound:Fe-containing oxide compound) of at least 0.1:1, such as at least 0.2:1, at least 0.3:1, at least 0.4:1, at least 0.5:1, at least 0.6:1, at least 0.7:1, at least 0.8:1, or even at least 0.9:1. Still, in a non-limiting embodiment, the mixture can have a molar ratio (spinel compound:Fe-containing oxide compound) of not greater than 9:1, not greater than 8:1, not greater than 7:1, not greater than 6:1, not greater than 5:1, not greater than 4:1, not greater than 3:1, or even not greater than 2:1. It will be appreciated that the foregoing molar ratio can be within a range including any of the minimum and maximum ratios noted above. In a particular embodiment, the mixture can include a molar ratio (spinel compound:Fe-containing oxide compound) of approximately 1:1.

For another embodiment including a dopant that is a mixture of the spinel compound and Fe-containing oxide compound, the mixture can define a molar ratio (Fe-containing oxide compound:spinel compound) of at least 0.1:1, such as at least 0.2:1, at least 0.3:1, at least 0.4:1, at least 0.5:1, at least 0.6:1, at least 0.7:1, at least 0.8:1 or at least 0.9:1. Still, in certain instances, the molar ratio (Fe-containing oxide compound:spinel compound) can be not greater than 9:1, such as not greater than 8:1, not greater than 7:1, not greater than 6:1, not greater than 5:1, not greater than 4:1, not greater than 3:1, not greater than 2:1. It will be appreciated that the foregoing molar ratio can be within a range including any of the minimum and maximum ratios noted above. In one embodiment, the mixture can include a molar ratio (Fe-containing oxide compound:spinel compound) of approximately 1:1.

Reference herein to an article comprising certain components (e.g., aluminosilicate and dopant(s)) is reference to an article that is formed from any of the components in any of the contents as disclosed in the embodiments herein. For example, the articles of the embodiments herein can be formed from an aluminosilicate and at least one dopant selected from the group consisting of Ni-containing compounds, Ni-containing oxide compounds, Fe-containing compounds, Fe-containing oxide compounds, Mg-containing compounds, Mg-containing oxide compounds, Mg containing and Al-containing oxide compounds, La-containing compounds, La-containing oxide compounds, Cr-containing compounds, Cr-containing oxide compounds, Mn-containing compounds, Mn-containing oxide compounds, Ce-containing compounds, Ce-containing oxide compounds, Sn-containing compounds, Sn-containing oxide compounds, Ti-containing compounds, Ti-containing oxide compounds, Zr-containing compounds, Zr-containing oxide compounds, spinel, and a combination thereof. It will also be appreciated that the article can be formed from the noted contents of the components as described in the embodiments herein, such that the initial mixture used to form the article can include those contents of components noted as being present in the article.

In certain instances, the body may be in the form of a composite body having a coating overlying a core. That is, embodiments herein also include composite materials that can include a body or core and a coating overlying at least a portion of the body. The coating can overly at least a majority of the core, such as at least 60%, at least 80%, or even the entire exterior surface area of the core. Moreover, the coating can be of sufficient thickness to withstand certain mechanical forces to limit or eliminate damage to the core. The coating may also be sufficiently robust to substantially eliminate corrosion of the core due to exposure to corrosive chemical species.

The core underlying the coating can include any material, including but not limited to, an inorganic material, an organic material, a metal, a metal alloy, a cermet, a ceramic, glass, polycrystalline material, monocrystalline material, and a combination thereof. The core may include an oxide, carbide, nitride, boride, and a combination thereof. The core can consist essentially of any of the foregoing materials. Still, the core can include any of the materials noted in the embodiments herein, including for example, an aluminosilicate material including at least one dopant.

Notably, the coating can have any of the attributes of a body including the compositions noted herein, such as an aluminosilicate and at least one dopant as referenced in the embodiments herein. For example, the coating can include a material including an aluminosilicate and at least one dopant selected from the group consisting of Ni-containing compounds, Ni-containing oxide compounds, Fe-containing compounds, Fe-containing oxide compounds, Mg-containing compounds, Mg-containing oxide compounds, Mg containing and Al-containing oxide compounds, La-containing compounds, La-containing oxide compounds, Cr-containing compounds, Cr-containing oxide compounds, Mn-containing compounds, Mn-containing oxide compounds, Ce-containing compounds, Ce-containing oxide compounds, Sn-containing compounds, Sn-containing oxide compounds, Ti-containing compounds, Ti-containing oxide compounds, Zr-containing compounds, Zr-containing oxide compounds, spinel, or any combination thereof.

In one embodiment, the coating can include a majority content by weight of the aluminosilicate. The coating can have a content of the aluminosilicate of at least 75 wt%, at least 80 wt%, at least 85 wt%, at least 88 wt%, at least 89 wt%, at least 90 wt% at least 91 wt% at least 92 wt% at least 93 wt%, at least 94 wt%, at least 95 wt%, at least 96 wt%, at least 97 wt%, at least 98 wt%. Still, in at least one embodiment, the coating can have a content of the aluminosilicate of not greater than 96 wt%, not greater than 95 wt%, not greater than 94 wt%, not greater than 93 wt%, not greater than 92 wt%, not greater than 91 wt%, not greater than 90 wt%, not greater than 89 wt%, not greater than 88 wt%, not greater than 87 wt%, not greater than 86 wt%, not greater than 85 wt%. It will be appreciated that the coating can include a content of the aluminosilicate within a range including any of the minimum and maximum percentages noted above.

The coating can comprise an aluminosilicate including mullite (3Al₂O₃ 2SiO₂), and more particularly, the aluminosilicate can consist essentially of mullite.

In one embodiment, the at least one dopant can include a material selected from the group consisting of NiFe₂O₄, Fe₃O₄, MgAl₂O₄ and Fe₃O₄, La₂O₃, LaCrO₃, Cr₂O₃, MnO₂, CeO₂, NiO, SnO₂, TiO₂, ZrB₂, (Mg, Fe)(Al, Fe)₂O₄, or any combination thereof. The coating can include a single dopant from any of the dopants noted herein. Still, the coating can include a plurality of dopants.

In still another embodiment, the coating can have an average relative emissivity over a wavelength of 0.5 microns to 5 microns of at least 0.5, at least 0.6, at least 0.65, at least 0.7, at least 0.8, at least 0.83, at least 0.85, at least 0.87, at least 0.88, at least 0.89, at least 0.9. In one non-limiting embodiment, the average relative emissivity over the wavelength of 0.5 microns to 5 microns can be not greater than 0.99, such as not greater than 0.98. It will be appreciated that the average relative emissivity can be within a range including any of the minimum and maximum values noted above. Moreover, the average relative emissivity can be for a range of wavelengths in the infrared portion of the electromagnetic spectrum thus providing an indication of the efficiency of reflecting heat. The coating can have a minimum emissivity as described in embodiments herein.

In at least one embodiment, the coating can have a melting temperature of at least 1100°C or at least 1200°C or at least 1300°C or at least or at least 1400°C or at least 1500°C or at least 1600°C or at least 1700°C or at least 1800°C or at least 1900°C or at least 2000°C or at least 2100°C or at least 2200°C. Still, in at least one embodiment, the melting temperature can be not greater than 3200°C or not greater than 3000°C or not greater than 2900°C or even not greater than 2800°C. It will be appreciated that the coating can have a melting temperature within a range including any of the minimum and maximum values noted above.

The coating may be particularly useful as a refractory article, such as a portion of a glass furnace. In at least one embodiment, the coating can be part of a refractory article used as part of a glass furnace superstructure. Moreover, the entire composite, including the body and the coating overlying the body can be a refractory article, which maybe used as part of a glass furnace, and more particularly, part of the superstructure of the glass furnace.

The coating can be formed to have a particular theoretical density to facilitate suitable performance, including but not limited to a theoretical density of at least 50% or at least 60% or at least 70% or at least 80% or at least 90% or at least 95% or at least 97% or at least 99%. In one embodiment, the theoretical density can be not greater than 99%, such as not greater than 98%, not greater than 97%, not greater than 95%, not greater than 90% or even not greater than 88%. It will be appreciated that the coating can have a theoretical density within a range including any of the minimum and maximum values noted above.

In certain instances, the coating may be essentially free of Sn, La, Cr, Mn, Ni, Zr, B, Ce, Ti, oxide compounds thereof, zircon, and a combination thereof. Reference herein to contents of materials in the coating that are essentially free include not greater than trace amounts of materials or contents of the materials that are present in impurity contents, such as less than 1 wt%, less than 0.5 wt%, less than 0.1 wt% or even less than 0.01 wt%. For example, in at least one instance, the coating can be essentially free of carbides, nitrides, borides, and a combination thereof. Moreover, it will be appreciated that in at least one instance, the coating can consist essentially of oxides and oxide compounds.

The coating may include a combination of distinct phases including polycrystalline, monocrystalline and/or amorphous phases. For example, the coating can include a phase of the aluminosilicate material and a phase including the dopant material. Still, in certain instances one or more phases may exist in the coating including a combination of the aluminosilicate and at least one dopant. Such phases having a combination of the aluminosilicate and at least one dopant may be a solid solution of one or more of the elements contained in the compounds. Still, in other instances, a phase including the aluminosilicate and at least one dopant may form a completely distinct composition and discrete phase.

In one embodiment, the coting can include a phase including alumina that can be distinct from a phase comprising the aluminosilicate. According to one embodiment, the coating can have a content of a phase including alumina that is less than a content of a phase comprising the aluminosilicate.

Moreover, in yet another embodiment, the coating may include a phase of silica distinct from a phase comprising the aluminosilicate. In such instances, the coating may have a content of silica less than a content of a phase comprising the aluminosilicate.

The embodiments herein may further include a method of making an article comprising forming a mixture including an aluminosilicate and at least one dopant selected from the group consisting of Ni-containing compounds, Ni-containing oxide compounds, Fe-containing compounds, Fe-containing oxide compounds, Mg-containing compounds, Mg-containing oxide compounds, Mg containing and Al-containing oxide compounds, La-containing compounds, La-containing oxide compounds, Cr-containing compounds, Cr-containing oxide compounds, Mn-containing compounds, Mn-containing oxide compounds, Ce-containing compounds, Ce-containing oxide compounds, Sn-containing compounds, Sn-containing oxide compounds, Ti-containing compounds, Ti-containing oxide compounds, Zr-containing compounds, Zr-containing oxide compounds, spinel, and a combination thereof and sintering the mixture at temperature within a range including at least 1200°C and not greater than 2800°C.

A process selected from the group consisting of pressing, mixing, molding, casting, punching, printing, depositing, drying, coating, and a combination thereof can be used.

As noted, the embodiments herein include a refractory article having a body including a ceramic comprising an aluminosilicate and a dopant. The refractory article can have any of the attributes of the embodiments herein. In one particular instance, the refractory article includes a body including a ceramic compirising an aluminosilicate present in an amount of at least 70 wt% and not greater than 97 wt% for a total weight of the body and a dopant comprising a Mg-containing oxide compound and a Fe-containing oxide compound, which can present in an amount within a range including at least 3 wt% and not greater than 6 wt%.

As will be appreciated, the ceramic can be in the form of a monolithic body including the aluminosilicate and dopant material substantially uniformly distributed throughout the entire volume of the body. In another instance, the body can be a composite including a core and a coating overlying the core, wherein the coating can include the ceramic material. The core or body underlying the coating can also include any of the materials of the embodiments herein. In at least one embodiment, the core and the coating can include at least one element that is the same between the composition of the core and the composition of the coating. For another embodiment, the core and coating can include at least one compound that is the same with respect to each of the respective compositions. For example, according to one embodiment, the core and the coating can each include an aluminosilicate material. In aother embodiment, the core and the coating can each include a majority content of one or more of the same oxide compounds. For one embodiment, the core and the coating can each include mullite. For yet another embodiment, the core can consists essentially of one or more oxide compounds and the coating can consist essentially of one or more oxide compounds. For example, the core can consist essentially of mullite. The core and the coating can be bonded directly to each other, without any intervening layers. More particularly, the core and coating can be co-sintered, such that the components are sinter-bonded.

In at least one embodiment, the article can be a refractory article having a body including any of the features of the embodiments herein. For example, the body of the refractory article can include an aluminosilicate that may include mullite. More particularly, the aluminosilicate material can consist essentially of mullite.

According to another embodiment, the body of the refractory article can include a first phase comprising the aluminosilicate material. The body may include a particular content of the first phase, such as at least 1 wt% of the first phase for the total weight of the body, or even at least 5 wt%, at least 10 wt%, at least 15 wt%, at least 20 wt%, at least 25 wt%, at least 30 wt%, at least 35 wt%, at least 40 wt%, at least 45 wt%, at least 50 wt%, at least 55 wt%, at least 60 wt%, at least 65 wt%, at least 70 wt%, at least 75 wt%, at least 80 wt%, at least 85 wt%, at least 90 wt%, or even at least 95 wt%. For at least one embodiment, the body can include a majority content of the first phase. In at least one non-limiting embodiment, the body can include not greater than 99.8 wt% of the first phase for the total weight of the body, such as not greater than 99 wt%, not greater than 98.5 wt%, not greater than 98 wt%, not greater than 97 wt%, not greater than 96 wt% not greater than 95 wt%, not greater than 94 wt%, not greater than 93 wt%, not greater than 92 wt% not greater than 91 wt%, not greater than 90 wt%, not greater than 89 wt%, not greater than 88 wt% not greater than 87 wt%, not greater than 86 wt%, not greater than 85 wt%, not greater than 84 wt% not greater than 83 wt%, not greater than 82 wt%, not greater than 81 wt%, not greater than 80 wt% not greater than 75 wt%, not greater than 70 wt%, not greater than 65 wt%, not greater than 60 wt% not greater than 55 wt%. It will be appreciated that the body can have an amount of the first phase within a range including any of the minimum and maximum percentages noted above.

The first phase may include a particular material, such as mullite. In one embodiment, the first phase can include at least 10% mullite, such as at least 20% mullite, at least 30% mullite, at least 40% mullite, at least 50% mullite, at least 60% mullite, at least 70% mullite, at least 80% mullite, at least 90% mullite, at least 95% mullite, or even at least 98% mullite. According to a particular embodiment, the first phase can consist essentially of mullite.

The first phase may have at least one species of the dopant, and more than one species of one or more dopants in the body. For example, the first phase can include at least one compound including at least one element of the dopant. In certain instances, the first phase can include an oxide compound including at least one element of the aluminosilicate and at least one element of the dopant. In yet another embodiment, the first phase can include a compound including at least one cation element of the aluminosilicate and at least one cation element of the dopant.

In more particular instances, the first phase may include a solid solution. For at least one embodiment, the first phase can include a solid solution of the aluminosilicate, and more particularly mullite, and at least one species of the dopant. For an embodiment, the first phase can include a solid solution of the aluminosilicate material, such as mullite, and a first compound including at least one species of the dopant. The first compound may include an oxide.

The first phase may comprise the majority of the body, but that need not necessarily always be the case for all embodiments herein. The first phase may form a substantially continuous phase extending throughout the entire volume of the body.

The body may include other phases that are distinct from the first phase. For example, the body can include a second phase distinct from the first phase. In at least one embodiment, the body can include a greater content of the first phase (Cp1) as compared to the content of the second phase (Cp2), as measured in weight percent or volume percent. According to one embodiment, the the body can define a ratio of the content of the first phase relative to the second phase as the ratio (Cp1:Cp2), which may have a value of at least 1.1:1 or at least 1.2:1 or at least 1.3:1 or at least 1.4:1 or at least 1.5:1 or at least 1.6:1 or at least 1.7:1 or at least 1.8:1 or at least 1.9:1 or at least 2:1, at least 3:1, at least 4:1, at least 5:1, at least 6:1, at least 7:1, at least 8:1, at least 9:1, at least 10:1. Still, in one non-limiting embodiment, the body can have a ratio (Cp1:Cp2) of not greater than 100:1, such as not greater than 90:1 or not greater than 80:1 or not greater than 70:1 or not greater than 60:1 or not greater than 60:1 or not greater than 50:1 or not greater than 40:1 or not greater than 30:1 or not greater than 20:1 or not greater than 10:1 or not greater than 8:1 or not greater than 6:1 or not greater than 5:1 or not greater than 4:1 or not greater than 3:1 or not greater than 2.5:1. It will be appreciated that the body can have a ratio (Cp1:Cp2) within a range including any of the minimum and maximum ratios noted above.

According to a particular embodiment, the second phase may be essentially free of the aluminosilicate material, and more particularly, can be essentially free of mullite. The second phase can have at least one species of the at leaset one dopant, such as at least one element from the one or more dopants. In certain instances, the second phase can include at least one compound including at least one element of the one or more dopants. In particular instances, the second phase can include an oxide compound having at least one element of the aluminosilicate and at least one element of the dopant. More particularly, the second phase may include a compound including at least one cation element of the aluminosilicate and at least one cation element of the dopant.

The body may include a particular content of the second phase, such as at least 1 wt% of the second phase for the total weight of the body, or even at least 2 wt%, at least 3 wt%, at least 4 wt%, at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, at least 15 wt%, at least 16 wt%, at least 17 wt%, at least 18 wt%, at least 19 wt%, at least 20 wt%, at least 21 wt%, at least 25 wt%, at least 30 wt%, at least 35 wt%, at least 40 wt%, at least 45 wt%, at least 50 wt%, or even at least 55 wt%. Still, in at least one non-limiting embodiment, the body may include not greater than 60 wt% of the second phase for the total weight of the body, such as not greater than 55 wt%, not greater than 50 wt%, not greater than 45 wt%, not greater than 40 wt%, not greater than 35 wt%, not greater than 30 wt%, not greater than 25 wt%, not greater than 20 wt%, not greater than 19 wt%, not greater than 18 wt%, not greater than 17 wt%, not greater than 16 wt%, not greater than 15 wt%, not greater than 14 wt%, not greater than 13 wt%, not greater than 12 wt%, not greater than 11 wt%, not greater than 10 wt%, not greater than 9 wt%, not greater than 8 wt%, not greater than 7 wt%, not greater than 6 wt%, not greater than 5 wt%, not greater than 4 wt%, not greater than 3 wt%, or even not greater than 2 wt%. It will be appreciated that the body can have a content of the second phase within a range including any of the minimum and maximum percentages noted above. In at least one embodiment, the body may include a minority content of the second phase.

According to one particular embodiment, the refractory article can have body including the dopant, which can include a combination of a Mg-containing oxide compound and a Fe-containing oxide compound present in an amount within a range including at least 1 wt% and not greater than 10 wt% for a total weight of the body. In one particular instance, the dopant can include (Mg, Fe)(Al, Fe)₂O₄, and may consist essentially of (Mg, Fe)(Al, Fe)₂O₄.

In certain instances, the article can have a body including a content of the aluminosilicate of at least 75 wt%, at least 80 wt%, at least 85 wt%, at least 88 wt%, at least 89 wt%, at least 90 wt% at least 91 wt% at least 92 wt% at least 93 wt%, at least 94 wt%, at least 95 wt%, at least 96 wt%, at least 97 wt%, or even at least 98 wt%. Still, in at least one non-limiting embodiment, the article can have a body including a content of the aluminosilicate of not greater than 96 wt%, not greater than 95 wt%, not greater than 94 wt%, not greater than 93 wt%, not greater than 92 wt%, not greater than 91 wt%, not greater than 90 wt%, not greater than 89 wt%, not greater than 88 wt%, not greater than 87 wt%, not greater than 86 wt%, or even not greater than 85 wt%. It will be appreciated that the body cn have a content of aluminosilicate within a range including any of the minimum and maximum ratios noted above.

In yet another embodiment, the body can have a particular content of dopant, which may include the total content of dopants (i.e., a content of a single dopant or the sum of more than one dopant). The body can include a content of the dopant of at least 3.5 wt%, at least 4 wt%, at least 4.5 wt%, at least 5 wt%, 5.5 least 6 wt%, at least 6.5 wt%, at least 7 wt% at least 7.5 wt% at least 8 wt% at least 8.5 wt%, at least 9 wt%, at least 9.5 wt%, at least 9.8 wt%. Still, in at least one non-limiting embodiment, the content of the dopant can be not greater than 5 wt%, not greater than 4 wt%, not greater than 3 wt%.

For at least one non-limiting embodiment, the body of the refractory article may consist essentially of oxides. The body of the refractory article may include a phase of alumina distinct from a phase comprising the aluminosilicate, such as the first phase and or second phase as provided in the embodiments herein. In at least one embodiment, the body may include a third phase distinct from the first phase and/or second phase, which may include alumina, and more particularly, can consist essentially of alumina. The content of the third phase can be the same as the contents given for the second phase according to embodiments herein. In at least one embodiment, the body comprises a content of alumina less than a content of a phase comprising the aluminosilicate. Moreover, the body of the refractory article may include a content of alumina less than a content of the second phase. Still, the body may include a content of alumina greater than a content of the second phase.

The body may also include a phase of material including silica, and more particularly, a fourth phase consisting essentially of silica. The fourth phase can be distinct from the first phase, second phase, and third phase. The presence of the fourth phase does not require the presence of a second phase or a third phase. The presence of a third phase does not require the presence of a second phase or fourth phase. The content of the fourth phase within the body can be the same as the contents given for the second phase according to embodiments herein. In at least one embodiment, the body comprises a content of silica that can be less than a content of a phase (e.g., a first phase) comprising the aluminosilicate. Moreover, the body of the refractory article may include a content of silica less than a content of the second phase. Still, the body may include a content of silica greater than a content of the second phase. Additionally, the body of the refractory article may include a content of silica less than a content of the third phase. In another embodiment, the body may include a content of silica greater than a content of the third phase.

One or more embodiments herein may demonstrate remarkable combination of average relative emissivity for a particular range of wavelengths of radiation combined with melting temperature to be particularly suited for use as refractory objects. In partiuclar, it is noted that utilization of a body comprising primarily an aluminosilicate material (e.g., mullite) in combination with a dopant of a spinel of NiFe₂O₄, or a dopant of a spinel of MgAl₂O₄ and Fe₃O₄ in a 50/50 mol ratio provided remarkable results. Notably, the content of such dopants may be within a range between 2 wt% and 12 wt% for a total weight of the body.

### Examples (Examples that do not fall into the scope of claim 1 are for illustrative purposes only) Example 1

Twenty samples were formed to create various refractory articles having bodies made of mullite and including a dopant as outlined in the Table 1 below. Each of the samples were by creating a mixture including the desired amount of the dopant (i.e., Fraction X) with electrofused mullite, approximately 15 wt% alumina (d50 of approximately 5 microns), approximately 4 wt% fumed silica (d50 of approximately 0.5 microns and SSA of 14 m²/g), such that the total of the contents was 100%. The "Standard Mullite" Sample was formed from approximately 81 wt% electrofused mullite, approximately 15 wt% alumina (d50 of approximately 5 microns), and approximately 4 wt% fumed silica (d50 of approximately 0.5 microns and SSA of 14 m2/g). All other samples included a particular amount of dopant, as identified in Table 1 below, and such content of dopant was substituted for an equal amount of mullite from the sample. Each of the samples was sintered at 1700°C for 10 hours.

With regard to the data presented in Table 1, it should be noted that emissivity is measured as noted in the description herein. For the room temperature measurements, the measurement was a hemispherical reflection. In the range of wavelengths between 0.4µm and 2.5µm, the reflection is measured using a Perking Elmer Lambda 950 spectrometer. In the range of wavelengths between 2µm and 25µm, the reflectivity is measured using a FTIR spectrometer. Radiation is received perpendicularly to the surface of the sample (i.e., normal incidence), and the reflected signal is measured via an integrating sphere (i.e., hemispherical reflection). The opening of the spheres in both spectrometers has a diameter of 20 mm. The sample is placed on the opening for reflection measurement (respectively transmission measurement if needed) and the sample need to be larger than the opening. Refectivity is the ratio of the recorded signal by the incident signal. Emissivity is derived by the formula: Emissivity = 1- Reflectivity. The sample is thick enough to avoid transmission. If needed, the diffuse transmissivity can also be measured in the spectrometer with the integrating sphere. In case the transmitted signal is not negligible, the emissivity is derived by the formula: Emissivity = 1- Reflectivity - Transmissivity.

For the high temperature measurements, the sample is heated with a high power CO2 laser, and the emission of a heated sample is measured in the direction perpendicular to the surface (i.e., normal emissivity). The average emissivity for the samples was calculated over the wavelength range, without weighting factor. The blackbody average was aweighted average along the wavelength range with the Planck function. Planck function gives spectral blackbody emission (i.e., anemission of a surface with emissivity of 1) with at a given wavelength and a given temperature. The Planck function at 1600C is given by the following function ${L}_{λ} \left(T\right) = \frac{2 {hc}^{2}}{{λ}^{5}} \frac{1}{exp \left(\frac{hc}{{λK}_{B} T}\right) - 1}$

Notably, the variables in the above equation include h=6,62.10⁻³⁴ J.s, which is Planck's constant, c=2,99.10⁸m.s⁻¹ , which is the velocity of light velocity in a vaccuum, K_{B}=1,38.10⁻23 m².kg.s⁻².K⁻¹ is the Boltzmann constant and λ is the wavelength in m, and T is the temperature in Kelvin. Wavenumber in cm-1 is the inverse of wavelength.

**Table 1**

| | **Dopant** | **RT measurement (hemispherical refl.)** | **HT measurement (normal emission)** | **RT measurement Average** | **1600°C measurement Average** |
|---|---|---|---|---|---|
| | **Fraction X** | **BlackBody average** | **BlackBody average** | **4000cm-1** | **4000cm-1** |
| **dopant in Mullite** | **%mass** | **1600°C** | **1600°C** | **~14000cm-1** | **~14000cm-1** |
| Standard Mullite | - | 0.13 | 0.14 | 0.13 | 0.13 |
| NiFe2O4 | 10.0% | 0.90 | | 0.90 | |
| NiFe2O4 | 5.0% | 0.86 | | 0.86 | |
| NiFe2O4 | 2.5% | 0.78 | | 0.78 | |
| Fe3O4 | 10.0% | 0.90 | | 0.89 | |
| Fe3O4 | 5.0% | 0.90 | | 0.89 | |
| Fe3O4 | 2.5% | 0.76 | | 0.74 | |
| Fe2O3 | 10.0% | 0.90 | | 0.90 | |
| Fe2O3 | 0.5% | | 0.25 | | 0.28 |
| (MgAl₂O₄)_{50% mol},(Fe₃O₄)_{50% mol} | 5% | 0.90 | | 0.90 | |
| La2O3 | 0.5% | | 0.14 | | 0.15 |
| LaCrO3 | 10.0% | 0.26 | | 0.26 | |
| Cr2O3 | 10.0% | 0.20 | | 0.17 | |
| Cr2O3 | 0.5% | | 0.26 | | 0.41 |
| MnO2 | 10.0% | 0.49 | | 0.48 | |
| CeO2 | 10.0% | 0.24 | | 0.25 | |
| NiO | 10.0% | 0.81 | | 0.85 | |
| SnO2 | 10.0% | 0.21 | | 0.21 | |
| TiO2 | 0.5% | | 0.21 | | 0.25 |
| ZrB2 | 10.0% | 0.24 | | 0.26 | |

Table 2 below provides some melting points of the materials made from the batch of samples of Example 1 noted above in Table 1. The melting temperatures provide further indication of the refractory capabilities of the samples.

**Table 2**

| **Dopant in Mullite** | **Fraction X %mass** | **Melting Temperature** |
|---|---|---|
| NiFe2O4 | 10.0% | 1850°C but NIS |
| Fe3O4 | 10.0% | 1595°C |
| Fe2O3 | 10.0% | 1350°C |
| (MgAl₂O₄)_{50%mol},(Fe₃O₄)_{50%mol} | 5% | 1600°C |
| LaCrO3 | 10.0% | 2450°C |
| Cr2O3 | 10.0% | ∼2300°C |
| MnO2 | 10.0% | 1347°C |
| CeO2 | 10.0% | 2400°C |
| NiO | 10.0% | 1957°C but NIS |
| SnO2 | 10.0% | 1625°C but vol. |
| ZrB2 | 10.0% | 3000°C |

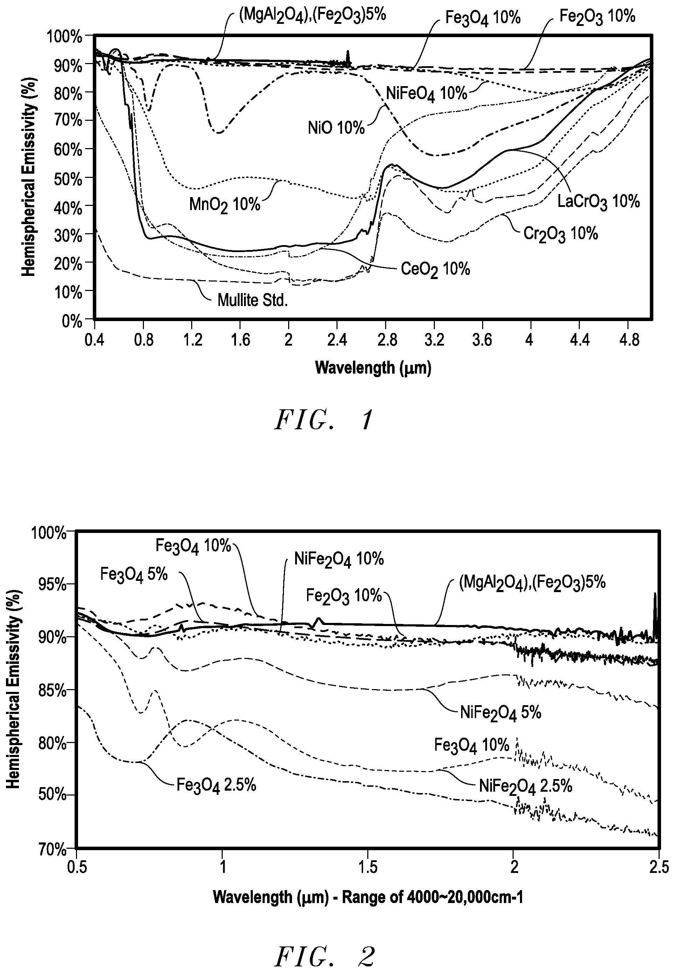

FIGs. 1 and 2 provide plots of emissivity versus wavelength for certain samples of Example 1. Notably, the sampels containing Fe₂O₃ (10%), Fe₃O₄ (10%), NiFeO₄ (10%), and (MgAl₂O₄),(Fe₂O₃) (5%) demonstrated the highest average emissivity of the samples tested. FIG. 2 further demonstrates the impact of the dopants on the emissivity for certain samples doped with iron-containing dopants. Notably, the sample with only 5% of (MgAl₂O₄),(Fe₂O₃) performed as well as the other samples having twice the content of iron-containing dopants.

It should be noted that the sample containing 5% (MgAl₂O₄),(Fe₂O₃) was formed according to the following process. The powder was synthetized by presintering by mixing 50% mol of spinel powder (MgAl₂O₄) and 50% mol of Fe₃O₄ powder. The powders were supplied by Alfa Aesar. The mixture was made into pellets by uniaxial pressing and then sintered at a temperature between 1500°C and 1650°C. The pellets were then crushed to 325 mesh size. This powder was then added as an additive in the mullite formulation at 5 wt%.

### Example 2

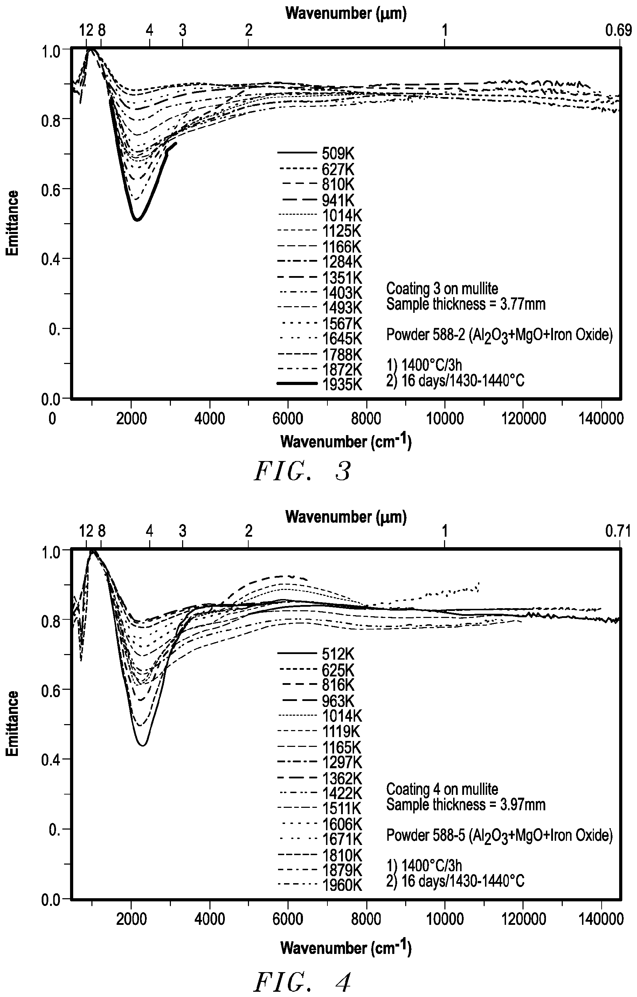

Two new samples representing a composite body including a core and coating were formed. The first sample was created by first electrofusion of a mixture of 42.3 wt% alumina, 27.0 wt% magnesium, and 30.6 wt% Fe₂O₃ powder. The fused cast material was then crushed into powder with grain size below 325 mesh size. The sieved powder was then placed in a liquid carrier to create a slurry that was sprayed onto a block of mullite. The coating had a thickness of approximately of 100~300 microns. FIG. 3 includes an emission spectra for the first sample.

A second sample was formed by electrofusion of a mixture of 59.7 wt% alumina, 31.3 wt% magnesium, and 11.9 wt% Fe₂O₃ powder. The fused cast material was then crushed into powder with grain size below 325 mesh size. The sieved powder was then placed in a liquid carrier to create a slurry that was sprayed onto a block of mullite. The coating had a thickness of approximately of 100~300 microns. FIG. 4 includes an emission spectra for the second sample.

Samples 1 and 2 were then tested according to the conditions noted above. In particular, the emissivity was measured using two Fourier transform infrared (FTIR) spectrometers manufactured by Bruker (Vertex Vertex 80v and 70) for performing emission measurements in the spectral range of 1000-16000 cm⁻¹. The samples had a thickness of about 4 mm and the typical diameter of the analyzed area on the sample was 2 mm. The sample was heated by a CO₂ laser (Diamond K500, Coherent INC.). The beam followed a path through a splitter and a set of mirrors for conducting heating of the two faces of the sample. Two radiation heat fluxes were simultaneously measured by both spectrometers: the flux emitted by the sample and the flux emitted by a black body. The black body was a Pyrox PY8 furnace, having a cylindrical cavity in lanthanum chromite LaCrO₃, pierced with a lateral orifice, and having an emissivity equal to 1. The emission of the heated sample was measured in the direction perpendicular to the surface (i.e., normal emissivity). The infrared spectrometers were also used as pyrometers for the measurement of the sample temperature. The method used was that from the point of Christiansen. The emission spectra for the first and second samples is shown in FIGs. 3 and 4 respectively. As noted, the emission spectra for both samples over the range of wavelengths and temperatures measured is suitable for use in refractory operations.

Notably, both samples demonstrated suitable performance and broad-band emissivity over the temperature range of interest.

It will be appreciated that reference herein to any materials of the articles of the embodiments includes forming the article essentially from any of the materials mentioned.

## Claims

1. A sintered refractory article consisting of:
a body including a ceramic comprising:
an aluminosilicate present in an amount of at least 70 wt% and not greater than 97 wt% for a total weight of the body; and
a dopant comprising a combination of a Mg-containing oxide compound and a Fe-containing oxide compound, present in an amount of at least 3 wt% and not greater than 6 wt% for a total weight of the body.

2. The refractory article of claim 1, in the form of a block which is a monolithic piece.

3. The refractory article of claim 1 which is a coating on a core of a composite body.

4. The refractory article of claim 3, wherein the core and the coating include at least one element that is the same.

5. The refractory article of claim 4, wherein the core includes an aluminosilicate.

6. The refractory article of claim 3, wherein the core and the coating both include a majority content of one or more of the same oxide compounds.

7. The refractory article of claim 6, wherein the core and the coating include mullite.

8. The refractory article of claim 3, wherein the core consists of an oxide.

9. The refractory article of claim 3, wherein the core consists of mullite.

10. The refractory article of claim 1, wherein the aluminosilicate comprises mullite.

11. The refractory article of claim 1, wherein the aluminosilicate consists of mullite.

12. The refractory article of claim 1, wherein the body includes a first phase comprising the aluminosilicate.

13. The refractory article of claim 12, wherein the first phase comprises mullite.

14. The refractory article of claim 1, wherein the body comprises a content of the aluminosilicate of at least 80 wt% for a total weight of the body.

## Patentansprüche

1. Gesintertes feuerfestes Erzeugnis, bestehend aus:
einem Körper einschließlich einer Keramik, umfassend:
ein Aluminosilikat, das in einer Menge von mindestens 70 Gew.-% und nicht mehr als 97 Gew.-% für ein Gesamtgewicht des Körpers vorhanden ist; und
einen Dotierstoff, umfassend eine Kombination aus einer Mg-haltigen Oxidverbindung und einer Fe-haltigen Oxidverbindung, der in einer Menge von mindestens 3 Gew.-% und nicht mehr als 6 Gew.-% für ein Gesamtgewicht des Körpers vorhanden ist.

2. Feuerfestes Erzeugnis nach Anspruch 1 in Form eines Blocks, der ein monolithisches Stück ist.

3. Feuerfestes Erzeugnis nach Anspruch 1, das eine Beschichtung auf einem Kern eines Verbundkörpers ist.

4. Feuerfestes Erzeugnis nach Anspruch 3, wobei der Kern und die Beschichtung mindestens ein Element einschließen, das das gleiche ist.

5. Feuerfestes Erzeugnis nach Anspruch 4, wobei der Kern ein Aluminosilikat einschließt.

6. Feuerfestes Erzeugnis nach Anspruch 3, wobei der Kern und die Beschichtung beide einen überwiegenden Gehalt an einer oder mehreren der gleichen Oxidverbindungen einschließen.

7. Feuerfestes Erzeugnis nach Anspruch 6, wobei der Kern und die Beschichtung Mullit einschließen.

8. Feuerfestes Erzeugnis nach Anspruch 3, wobei der Kern aus einem Oxid besteht.

9. Feuerfestes Erzeugnis nach Anspruch 3, wobei der Kern aus Mullit besteht.

10. Feuerfestes Erzeugnis nach Anspruch 1, wobei das Aluminosilikat Mullit umfasst.

11. Feuerfestes Erzeugnis nach Anspruch 1, wobei das Aluminosilikat aus Mullit besteht.

12. Feuerfestes Erzeugnis nach Anspruch 1, wobei der Körper eine erste Phase, umfassend das Aluminosilikat, einschließt.

13. Feuerfestes Erzeugnis nach Anspruch 12, wobei die erste Phase Mullit umfasst.

14. Feuerfestes Erzeugnis nach Anspruch 1, wobei der Körper einen Gehalt an dem Aluminosilikat von mindestens 80 Gew.-% für das Gesamtgewicht des Körpers umfasst.

## Revendications

1. Article réfractaire fritté constitué de :
un corps comportant une céramique comprenant :
un aluminosilicate présent en une quantité d'au moins 70 % en poids et non supérieure à 97 % en poids pour un poids total du corps ; et
un dopant comprenant une combinaison d'un composé d'oxyde contenant du Mg et d'un composé d'oxyde contenant du Fe, présent en une quantité d'au moins 3 % en poids et non supérieure à 6 % en poids pour un poids total du corps.

2. Article réfractaire selon la revendication 1, sous la forme d'un bloc qui est une pièce monolithique.

3. Article réfractaire selon la revendication 1, qui est un revêtement sur un noyau d'un corps composite.

4. Article réfractaire selon la revendication 3, dans lequel le noyau et le revêtement comportent au moins un élément qui est le même.

5. Article réfractaire selon la revendication 4, dans lequel le noyau comporte un aluminosilicate.

6. Article réfractaire selon la revendication 3, dans lequel le noyau et le revêtement comportent tous deux une teneur majoritaire d'un ou plusieurs des mêmes composés d'oxyde.

7. Article réfractaire selon la revendication 6, dans lequel le noyau et le revêtement comportent de la mullite.

8. Article réfractaire selon la revendication 3, dans lequel le noyau est constitué d'un oxyde.

9. Article réfractaire selon la revendication 3, dans lequel le noyau est constitué de mullite.

10. Article réfractaire selon la revendication 1, dans lequel l'aluminosilicate comprend de la mullite.

11. Article réfractaire selon la revendication 1, dans lequel l'aluminosilicate est constitué de mullite.

12. Article réfractaire selon la revendication 1, dans lequel le corps comporte une première phase comprenant l'aluminosilicate.

13. Article réfractaire selon la revendication 12, dans lequel la première phase comprend de la mullite.

14. Article réfractaire selon la revendication 1, dans lequel le corps comprend une teneur en aluminosilicate d'au moins 80 % en poids pour un poids total du corps.
